# EUROPÄISCHE PATENTSCHRIFT

(11) **EP 0 678 408 B1**
(45) Veröffentlichungstag und Bekanntmachung des Hinweises auf die Patenterteilung: **15.04.1998**
(21) Anmeldenummer: 95101568.4
(22) Anmeldetag: 07.02.1995
(51) Int. Cl.: B60H 1/00, B60R 13/02

(54) **Deckenluftkanal, insbesondere für Omnibusse**
Ceiling air channel, particularly for buses
Conduit d'air de plafond, notamment pour autobus

(30) Priorität: 23.04.1994 DE 4414245
(43) Veröffentlichungstag der Anmeldung: 25.10.1995
(73) Patentinhaber: HAPPICH Fahrzeug- und Industrieteile GmbH, 42285 Wuppertal (DE)
(72) Erfinder: Celik, Fahri, D-42283 Wuppertal (DE); Jäckel, Helmut, D-42553 Velbert (DE)

(56) Entgegenhaltungen:
- EP-A- 0 457 063
- EP-A- 0 522 261
- EP-A- 0 529 263

## Beschreibung

Die Erfindung bezieht sich auf einen Deckenluftkanal, insbesondere für Omnibusse, mit einem Luftkanalboden, der Öffnungen zur Aufnahme von Einbauelementen, wie Lüfter, Leuchten u. dgl. aufweist und mit Federklammern, die Randkanten des Luftkanals, die die Kanalöffnung begrenzen, zu hinterschnappen vermögen.

Die Wände eines Deckenluftkanals und damit auch der Luftkanalboden bestehen üblicherweise aus durchlaufenden Aluminiumstrangpreßprofilen. Der Luftkanalboden trägt Belüftungsvorrichtungen, bei denen jeder Fahrgast ein Regelorgan für einen Frischluftstrom individuell einstellen kann. Neben diesen Belüftungseinrichtungen, meist in Form von Kugeldüsen, sind im Luftkanalboden oftmals weitere Einbauelemente, wie Leuchten, Lautsprecher, Bedienungsschalter und dgl. angeordnet. Mit zunehmender Ausstattungsklasse eines Busses steigt auch die Anzahl der Einbauelemente an. Die Montage der Einbauelemente erfolgt in der Regel erst nach der Busfertigstellung und Festlegung des jeweiligen Sitzreihenabstandes und ist sehr aufwendig. So müssen zunächst unter Zuhilfenahme von Schablonen die für die Aufnahme der Einbauelemente erforderlichen Öffnungen angerissen werden. Sodann sind in die Eckbereiche Bohrungen einzubringen und schließlich müssen die Öffnungen ausgesägt werden, was insgesamt ein langwieriges und mühseliges über Kopf arbeiten verlangt. Um nun nicht für jedes einzelne Einbauelement in den Luftkanalboden eine entsprechende Aufnahmeöffnung einbringen zu müssen, ist man dazu übergegangen, Einbaukombinationen zu verwenden. Hierunter wird eine Grundplatte mit daran befestigten Einbauelementen, wie Lüfter, Leseleuchten, Schalter usw. verstanden. Eine solche Einbaukombination wie sie z.B. im Katalog K 51/36 - 1/10 81 (vgl. Deckblatt, inneres Faltblatt und Seiten 25, 34-43) der Anmelderin gezeigt ist, erspart zwar die Einbringung diverser Einbauöffnungen, verursacht aber auch zusätzliche Kosten, zumal die Einbaukombinationen oftmals mit Einbauelemente bestückt sind, die nicht immer benötigt werden. Eine Einbaukombination hat auch ein beträchtliches Gewicht, was bei der Montage, insbesondere der Verkabelung getragen und durch eine schraubgemäße Befestigung gehalten werden muß.

Es ist auch, z. B. durch die gattungsgemäße EP-A- 0 529 263 bekannt, eine Kanalbodenöffnung des Luftkanals durch einen Luftkanalboden zu verschließen, der sich aus aneinandergereihten Einbaukombinationen und Profilleisten-Zwischenstücken zwischen den über jeder Sitzreihe anzuordnenden Einbaukombination zusammensetzt. Da der Abstand der Sitzreihen stark variieren kann, muß eine Vielzahl von Zwischenstücken unterschiedlicher Länge auf Lager gehalten werden, was neben der aufwendigen Montage die Kosten weiter erhöht. Bei dieser bekannten Lösung treten auch Abdichtungsprobleme auf.

Die EP-A- 0 522 261 zeigt eine Luftkanalanordnung, insbesondere für Omnibusse, mit einer mehrteilig ausgebildeten Blende, die zwei sich in Längsrichtung erstreckende Profilteile besitzt, die einen Längsschlitz begrenzen. Die Profilteile sind an Halteelementen festgelegt, die mit Abstand zueinander in Längsrichtung des Omnibusses angeordnet sind. Zur Befestigung der Profilteile an den Halteelementen ist eine Klipsverbindung vorgesehen.

Der vorliegenden Erfindung liegt nun, ausgehend von einem Deckenluftkanal der eingangs genannten Art, die Aufgabe zugrunde, diesen in bezug auf den Luftkanalboden und in bezug auf die Anordnung der Einbauelemente zu verbessern, wobei insbesondere Herstellungs- und Montagekosten eingespart werden sollen.

Zur Lösung dieser Aufgabe ist erfindungsgemäß vorgesehen, daß der Luftkanalboden aus zwei axial aneinandergesetzten, aus Kunststoff bestehenden Profilleisten gebildet ist, daß die Profilleisten mehrere, rückseitig angeformte Längsstege aufweisen, welche parallel jedoch zueinander beabstandet verlaufen und jeweils mit einem etwa pilzförmigen Querschnitt ausgebildet sind, daß an den Längsstegen mehrere untereinander einen Abstand wahrende, die Profilleiste querende Halteelemente mit die Pilzköpfe der Längsstege übergreifenden Befestigungsaufnahmen angeordnet sind und daß die Halteelemente an ihren den Rändern der Profilleiste benachbarten Enden mit den Federklammern bestückt sind.

Die erfindungsgemäßen Maßnahmen erbringen beträchtliche Vorteile. So ist zunächst eine Kunststoff-Profilleiste äußerst einfach und preiswert im Extrusionsverfahren herzustellen, und zwar auch mit Sichtflächen, die den ästhetischen Ansprüchen genügen, so daß eine Bespannung mit einem Dekorationsmaterial im allgemeinen nicht mehr erforderlich ist. Die rückseitigen Stege können einstückig und materialeinheitlich augeformt werden und sowohl als Versteifungsorgane wie auch als Befestigungsorgane für den Luftkanalboden gleichermaßen dienen. Die Halteelemente mit ihren Befestigungsaufnahmen können auf die Stege aufgeschoben oder aufgeklipst werden und halten die Profilleiste plan, die damit nicht Durchhängen kann. Die Anordnung von Federklammern, bei denen es sich um handelsübliche Kaufteile handeln kann, an den Halteelementen ermöglicht es, die Halteelemente und die damit verbundene Profilleiste von unten her an den Luftkanal heranzuführen und daran durch blosses Aufklipsen zu befestigen, wobei die Federklammern die Randkanten des Luftkanals, die die Kanalbodenöffnung begrenzen, hinterschnappen. Eine solche Klips- oder Schnappverbindung ist aber auch leicht demontierbar, so daß sich Einbauöffnungen in die Profilleiste für Einbauelemente einarbeiten lassen, wenn die Profilleiste vom Luftkanal getrennt ist. Für die Einbauelemente bildet die Profilleiste praktisch die Grundplatte der herkömmlichen Einbaukombinationen, jedoch mit dem Unterschied, daß beliebige Kombinationsmöglichkeiten bestehen. Die Einbringung der Einbauöffnungen in die Profilleiste kann außerhalb des Luftkanals erfolgen also auch mit ortsfest angeordneten, ggf. auch CNC gesteuerten Maschinen. Damit besteht aber auch die Möglichkeit, die einzelnen Einbauelemente zu verkabeln, d. h. mit elektrischen Leitungen miteinander zu verbinden, bevor die den Luftkanalboden bildende Profilleiste am Deckenluftkanal als unterer Abschluß angebracht wird.

Gemaß einer Ausgestaltung der Erfindung kann vorgesehen sein, daß die den Luftkanalboden bildende Profilleiste etwa in der Längsmitte getrennt ist. Auf diese Weise läßt sich die Handhabung und der Transport vereinfachen, zumal zu berücksichtigen ist, daß ein Deckenluftkanal elf Meter lang sein kann.

Eine weitere Ausgestaltung der Erfindung ist dadurch gekennzeichnet, daß die Profilleiste mit Randkantenbereichen die die Kanalbodenöffnung begrenzenden Randkanten des Luftkanals überlappt und daß die Profilleiste im Bereich der Überlappungszonen mit Dichtschnüren ausgestattet ist. Damit können Abdichtungsprobleme in einfacher Weise gelöst werden.

Zur Vereinfachung und Verbilligung trägt bei, daß die Halteelemente als Kunststoff-Spritzgußteile ausgebildet sind.

Ein Ausführungsbeispiel der Erfindung wird im folgenden anhand der Zeichnung näher erläutert und es zeigen:

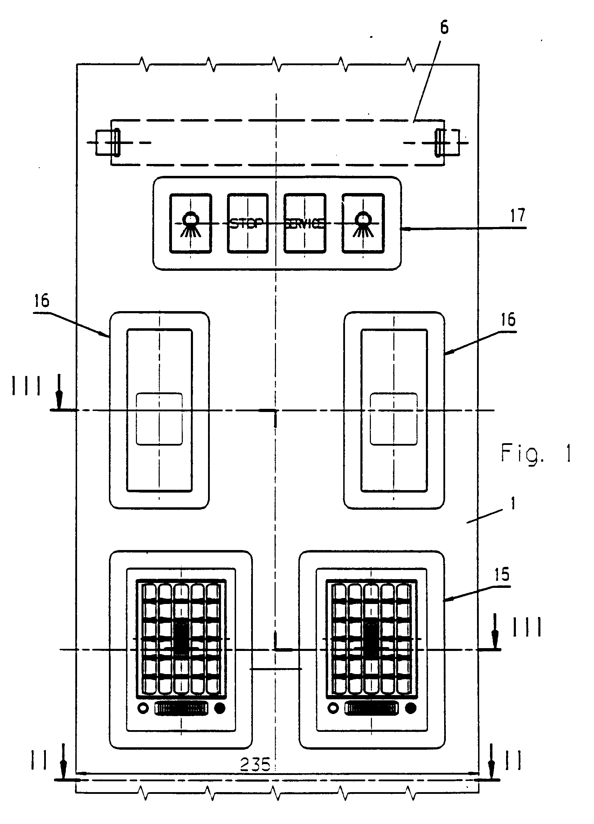

- Fig. 1: eine Ansicht des Deckenluftkanals in Richtung des Pfeils I in Fig. 2 gesehen,
- Fig. 2: einen Schnitt, folgend der Linie II-II in Fig. 1 und
- Fig. 3: einen Schnitt, folgend der Linie III-III in Fig. 1.

Der Luftkanalboden 100 besteht aus dem Abschnitt einer aus Kunststoff gebildeten Profilleiste 1, die rückseitig, d.h. auf ihrer dem Luftkanal 2 zugewandten Seite mit parallel zueinander verlaufenden Längsstegen 3 mit einem Pilzkopf 4 an den freien Stegenden ausgebildet ist. Die Längsstege 3, von denen z.B. wie dargestellt fünf vorhanden sind, verlaufen mit Abstand zueinander. Die beiden äußeren Längsstege weisen lediglich einen halben Pilzkopf 4 auf. Der Luftkanalboden 100 setzt sich aus zwei axial aneinandergesetzte Profilleisten 1, die eine Länge bis 5,5 m aufweisen können, zusammen.

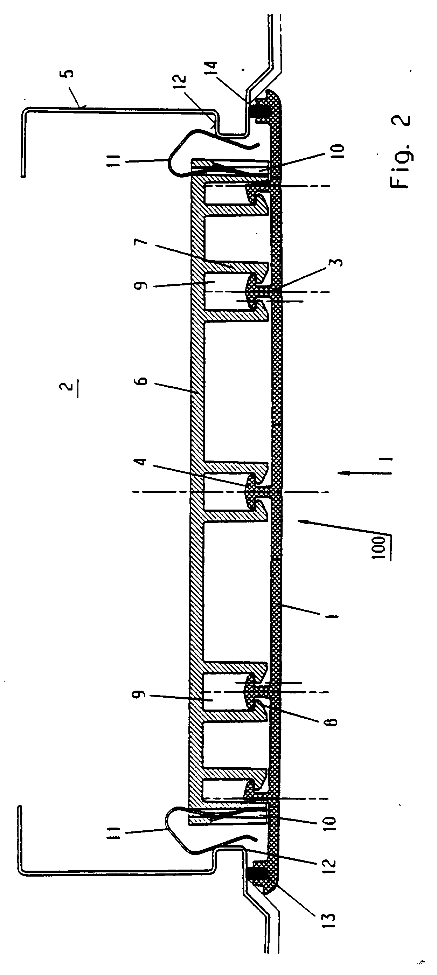

Zur Anordnung der Profilleiste 1 am Luftkanalgehäuse 5, sind die Profilleiste 1 querende Halteelemente 6 vorgesehen. Diese Halteelemente 6, die eine Breite von z.B. 30 mm aufweisen und als Kunststoff-Spritzgußteile ausgebilden sein können, sind mit Abstand in Reihe hintereinander an der Profilleiste 1 festgelegt. Zur Festlegung an der Profilleiste 1 weisen die Halteelemente 6 angeformte Klipsarme 7 mit Hinterrastnasen 8 auf, wodurch die Pilzköpfe 4 übergreifende Befestigungsaufnahmen 9 gebildet werden. Um die aus der Profilleiste 1 und den Halteelementen 6 bestehende Baueinheit in besonders einfacher Weise durch eine Klips- oder Einrastverbindung am Luftkanalgehäuse festlegen zu können, weist jedes Halteelement 6 an den Stirnenden Steckaufnahmen 10, die mit Federklammern 11 bestückt sind auf. Diese Federklammern 11 sind dazu bestimmt, Randkanten 12 des Luftkanals 2, die die Kanalbodenöffnung begrenzen zu hinterschnappen (Fig. 2).

Randkantenbereiche der Profilleiste 1 überlappen die die Kanalbodenöffnung begrenzenden Randkanten 12 des Luftkanals 2. Nuten 13 in den Randkantenbereichen der Profilleiste 1 nehmen Dichtungsschnüre 14 auf, um eine Abdichtung gegenüber dem Luftkanalgehäuse 5 zu erzielen.

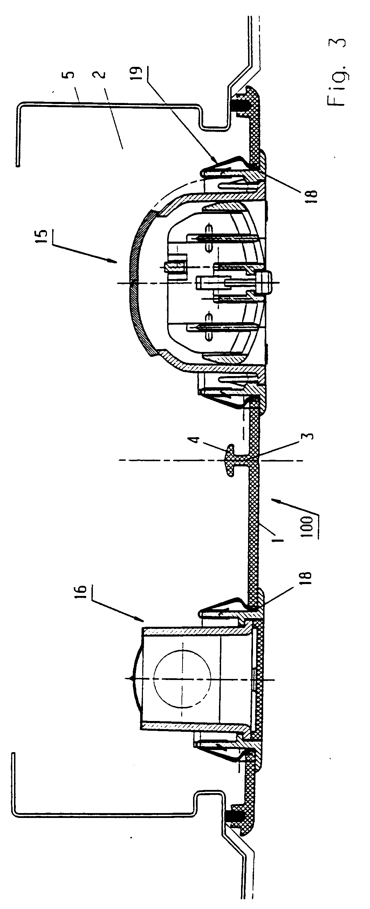

Die Profilleiste 1 ist auch als Träger für diverse Einbauelemente in Form von Lüftern 15, Leseleuchten 16, Schaltern 17 u. dgl. vorgesehen. Fig. 3 verdeutlicht, daß für jedes einzelne Einbauelement eine separate Aufnahmeöffnung 18 in der Profilleiste 1 vorgesehen ist. In jeder Aufnahmeöffnung 18 wird ein einzelnes Einbauelement, z.B. ein Lüfter 15 mittels Federklammern 19 gehalten. Die Aufnahmeöffnungen 18 können vor der Montage der Profilleiste 1 in diese eingebracht werden, wie auch die Anordnung der individuell zu bestimmenden Einbauelemente und deren elektrische Verdrahtung vor der Profilleistenmontage erfolgen kann.

## Patentansprüche

1. Deckenluftkanal, insbesondere für Omnibusse, mit einem Luftkanalboden (100), der Öffnungen (18) zur Aufnahme von Einbauelementen, wie Lüfter (15), Leuchten (16) u. dgl. aufweist und mit Federklammern (11), die Randkanten (12) des Luftkanals (2), die die Kanalöffnung begrenzen, zu hinterschnappen vermögen, dadurch gekennzeichnet, daß der Luftkanalboden (100) aus zwei axial aneinandergesetzten, aus Kunststoff bestehenden Profilleisten (1) gebildet ist,
daß die Profilleisten (1) mehrere, rückseitig angeformte Längsstege (3) aufweisen, welche parallel jedoch zueinander beabstandet verlaufen und jeweils mit einem etwa pilzförmigen Querschnitt ausgebildet sind,
daß an den Längsstegen (3) mehrere untereinander einen Abstand wahrende, die Profilleisten (1) querende Halteelemente (6) mit die Pilzköpfe (4) der Längsstege (3) übergreifenden Befestigungsaufnahmen (9) angeordnet sind und
daß die Halteelemente (6) an ihren den Rändern der Profilleisten (1) benachbarten Enden mit den Federklammern (11) bestückt sind.

2. Deckenluftkanal nach Anspruch 1, dadurch gekennzeichnet, daß die den Luftkanalboden (100) bildende Profilleiste (1) etwa in der Längsmitte getrennt ist.

3. Deckenluftkanal nach Anspruch 1 oder 2, dadurch gekennzeichnet, daß die Profilleiste (1) mit Randkantenbereichen die die Kanalbodenöffnung begrenzenden Randkanten (12) des Luftkanals (2) überlappt und daß die Profilleiste (1) im Bereich der Überlappungszonen mit Dichtschnüren (14) ausgestattet ist.

4. Deckenluftkanal nach wenigstens einem der Ansprüche 1 bis 3, dadurch gekennzeichnet, daß die Halteelemente (6) als Kunststoff-Spritzgußteile ausgebildet sind.

## Claims

1. Ceiling air duct, in particular for buses, having an air-duct bottom (100), which has openings (18) for accommodating built-in elements such as fan (15), lights (16) and the like, and having spring clips (11) capable of snapping behind those boundary edges (12) of the air duct (2) which delimit the duct opening, characterized in that the air-channel bottom (100) is formed from two profiled strips (1) which are placed next to one another axially and consist of plastic,
in that the profiled strips (1) have a plurality of longitudinal webs (3) which are moulded-on on the rear side, run in parallel but at a distance from one another and are in each case designed with an approximately mushroom-shaped cross-section,
in that there are arranged on the longitudinal webs (3) a plurality of retaining elements (6) which maintain a distance from one another, cross the profiled strips (1) and have mounting sockets (9) which fit over the mushroom heads (4) of the longitudinal webs (3), and
in that the retaining elements (6) are fitted, at their ends adjacent to the boundaries of the profiled strips (1), with spring clips (11).

2. Ceiling air duct according to Claim 1, characterized in that the profiled strip (1) forming the air-duct bottom (100) is separated approximately in the longitudinal centre.

3. Ceiling air duct according to Claim 1 or 2, characterized in that the boundary-edge regions of the profiled strip (1) overlap those boundary edges (12) of the air duct (2) which delimit the opening in the duct bottom, and in that the profiled strip (1) is fitted with sealing cords (14) in the region of the overlapping zones.

4. Ceiling air duct according to at least one of Claims 1 to 3, characterized in that the retaining elements (6) are designed as injection-moulded plastic parts.

## Revendications

1. Conduit d'air de plafond, en particulier pour autobus, comprenant un plancher (100) de conduit d'air, qui présente des ouvertures (18) pour recevoir des éléments à encastrer tels que des ventilateurs (15), des lampes (16) et des objets analogues, et des pinces à ressort (11) capables de saisir par l'arrière les bords latéraux (12) du conduit d'air (2) qui délimitent l'ouverture du conduit, caractérisé en ce que le plancher (100) de conduit d'air est formé de deux lattes profilées (1) en matière plastique accolées axialement, en ce que les lattes profilées (1) présentent plusieurs nervures longitudinales (3) formées au dos, lesquelles s'étendent parallèlement, mais cependant à distance l'une de l'autre, et sont réalisées chacune avec une section plus ou moins en forme de champignon, en ce que, sur les nervures longitudinales (3), sont disposés plusieurs éléments de retenue (6) espacés l'un de l'autre, croisant les lattes profilées (1) et présentant des logements de fixation (9) enserrant par le haut les têtes en forme de champignon (4) des nervures longitudinales (3), et en ce que les éléments de retenue (6) sont équipés des pinces à ressort (11) à leurs extrémités proches des bords des lattes profilées (1).

2. Conduit d'air de plafond suivant la revendication 1, caractérisé en ce que la latte profilée (1) formant le plancher (100) de conduit d'air est séparée plus ou moins en son milieu longitudinal.

3. Conduit d'air de plafond suivant la revendication 1 ou 2, caractérisé en ce que la latte profilée 1 chevauche, par des zones de bords latéraux, les bords latéraux (12) du conduit d'air (2), délimitant l'ouverture du plancher de conduit, et en ce que la latte profilée (1) est munie de joints d'étanchéité (14) dans le domaine des zones de chevauchement.

4. Conduit d'air de plafond suivant l'une au moins des revendications 1 à 3, caractérisé en ce que les éléments de retenue (6) sont réalisés sous la forme de pièces moulées par injection en matière plastique.
